(19) Europäisches Patentamt
European Patent Office
Office européen des brevets

(11) **EP 3 870 947 B1**

(12) **EUROPÄISCHE PATENTSCHRIFT**

(45) Veröffentlichungstag und Bekanntmachung des Hinweises auf die Patenterteilung:
**29.04.2026  Patentblatt 2026/18**

(21) Anmeldenummer: **19770037.0**

(22) Anmeldetag: **16.09.2019**

(51) Internationale Patentklassifikation (IPC):
**G01L 19/00** (2006.01)   **G01N 11/08** (2006.01)
**G01N 11/00** (2006.01)   **G01N 9/26** (2006.01)
**G01N 35/00** (2006.01)

(52) Gemeinsame Patentklassifikation (CPC):
**G01N 9/26; G01N 11/08; G01N 35/00693;**
G01F 25/10; G01N 2011/0013

(86) Internationale Anmeldenummer:
**PCT/EP2019/074708**

(87) Internationale Veröffentlichungsnummer:
**WO 2020/083568 (30.04.2020 Gazette 2020/18)**

(54) **VERFAHREN ZUM VERIFIZIEREN EINES DICHTE- UND/ODER VISKOSITÄTSMESSGERÄTES IN EINER MESSSTELLE**

METHOD AND MEASURING DEVICE FOR VERIFYING A DENSITY AND/OR VISCOSITY IN A MEASURING STATION

PROCÉDÉ ET DISPOSITIF DE MESURE POUR VÉRIFIER UNE DENSITÉ ET / OU UNE VISCOSITÉ DANS UNE STATION DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.10.2018  DE 102018126230**

(43) Veröffentlichungstag der Anmeldung:
**01.09.2021  Patentblatt 2021/35**

(73) Patentinhaber: **TrueDyne Sensors AG**
**4153 Reinach (CH)**

(72) Erfinder:
• **ZEHNLE, Steffen**
**79539 Lörrach (DE)**
• **HUBER, Christof**
**3007 Bern (CH)**
• **RITTER, Josua**
**4153 Reinach (CH)**

(74) Vertreter: **Endress + Hauser Group Services (Deutschland) AG+Co. KG**
**Colmarer Straße 6**
**79576 Weil am Rhein (DE)**

(56) Entgegenhaltungen:
EP-A1- 0 874 976       US-A- 5 661 232
US-A- 5 861 561        US-A1- 2004 216 509
US-A1- 2015 285 700    US-A1- 2018 246 024
US-A1- 2018 246 024

• KALOTAY P ED  - PIEPER JEFF: "Density and viscosity monitoring systems using Coriolis flow meters", ISA TRANSACTIONS, INSTRUMENT SOCIETY OF AMERICA. PITTSBURGH, US, vol. 38, no. 4, 25 November 1999 (1999-11-25), pages 303 - 310, XP004244796, ISSN: 0019-0578, DOI: 10.1016/S0019-0578(99)00023-3
• KALOTAY P ED  - PIEPER JEFF: "Density and viscosity monitoring systems using Coriolis flow meters", ISA TRANSACTIONS, INSTRUMENT SOCIETY OF AMERICA. PITTSBURGH, US, vol. 38, no. 4, 25 November 1999 (1999-11-25), pages 303 - 310, XP004244796, ISSN: 0019-0578, DOI: 10.1016/S0019-0578(99)00023-3

**Beschreibung**

Die Erfindung bezieht sich auf ein Verfahren zum Verifizieren eines Dichte- und/oder Viskositätsmessgerätes in einer Messstelle einer Prozessanlage während eines laufenden Betriebes und eine Vorrichtung zum Überprüfen eines Dichte- und/oder Viskositätsmessgerätes in einer Messstelle einer Prozessanlage während eines laufenden Betriebes der Prozessanlage mittels eines MEMS basierten Master- oder Kontrolldichtemessgerätes.

Dichte- und/oder Viskositätsmessgeräte werden insbesondere dazu verwendet, in einer Prozessanlage die Dichte und/oder Viskosität eines Mediums im laufenden Betrieb, d.h. beim Ausführen eines Prozesses kontinuierlich zu erfassen. Die Erfassung der Dichte und/oder Viskosität erfolgt hierbei unter den zum Ausführen des Prozesses notwendigen Prozessbedingungen. Dies sind insbesondere Temperatur und Druck.

Um die Vertrauenswürdigkeit der Messergebnisse sicher zu stellen, müssen diese Messgeräte periodisch überprüft werden. Es gibt verschiedenen Möglichkeiten diese Überprüfung durchzuführen. Gängige Methoden sind:

- Probennahme im offenen Behälter und Messung mit einem Hydrometer (Messspindel) oder alternativ mit einem mobilen Handdichtemesser auf Basis eines U-Rohrbiegeschwingers im Feld. Diese Methode hat den Nachteil, dass die Messung nicht bei Prozessdruck erfolgen kann. Das ist gerade bei Medien mit leichtflüchtigen Anteilen (Dampfdrücke deutlich unter einem bar abs.) sehr problematisch, da sich die Probe somit bei der Probenahme und Messung verändert.
- Probenahme im geschlossenen Behälter und nachträgliche Messung im Labor mit einem Pyknometer oder einem Labormessgerät auf Basis der U-Rohrbiegeschwinger Methode. Bei diesen Labormessungen ist die Messgenauigkeit größer als bei den Messungen im Feld. Allerdings kann auch hier nicht bei Prozessbedingungen (T und p) gemessen werden. Außerdem können leichtflüchtige Anteile auch in einer geschlossen Flasche verdampfen und beim Öffnen entweichen. Die Probe wird damit auch hier potentiell verfälscht.

Messungen im Feld bei Prozessdruck mittels eines Druck-Pyknometers. Pyknometer dienen zur Bereitstellung eines präzisen reproduzierbaren Volumens eines Mediums in einem Glas- oder Metallkolben. Durch das Wägen des leeren und befüllten Kolbens lässt sich auf die Dichte des Mediums schließen. Verwendet man robuste und isolierte Metallkolben, ausgerüstet mit Druck- und Temperaturmessgeräten, kann die Messung auch unter hohen Drücken und bei Prozesstemperaturen erfolgen. Die Messmethode ist bei sorgfältiger Arbeit und dem Einhalten aufwändiger Reinigungs- und Prüfabläufe sehr genau und bietet die Möglichkeit bei Prozessdrücken und Prozesstemperaturen zu messen. Problematisch ist allerdings die aufwändige Reinigung der Kolben. Insbesondere bei zähflüssigen Medien mit einer hohen Viskosität können Teile des Mediums an einer Wand des Kolbens zurückbleiben und somit das Ergebnis beeinflussen.

Nachteilig an allen beschrieben Methoden ist, dass das Medium nach der Messung entsorgt werden muss.

Um diesem Nachteil Rechnung zu tragen, gibt es in jüngster Vergangenheit Bestrebungen, eine weitere Überprüfungsmethode in der Industrie zu etablieren. Dazu wird ein Master- oder Kontrolldichtemessgerät vorgesehen, welches in Serie mit dem zu überprüfenden/verifizierenden Messgerät in der Anlage installiert wird. Die Installation erfolgt dabei derartig, dass eine Abzweigstrecke vorgesehen wird, in der das Master- oder Kontrolldichtemessgerät angeschlossen werden kann. Um das Strömungsverhalten des Mediums durch die Anlage möglichst nicht zu ändern, wird die Abzweigstrecke an die eigentliche Prozessstrecke, in der sich das Messgerät befindet, angepasst, d.h. die Abzweigstrecke weist bspw. gleiche Nennrohrweiten wie die Prozessstrecke auf und/oder wird in Serie zu dieser geschaltet. Derartige Maßnahmen sind nicht nur sehr zeitaufwendig bei der Realisierung, sondern auch verhältnismäßig teuer. Ein für die Erfindung relevantes Dokument des Standes der Technik ist das Patentdokument EP 0 874 976 A1.

Es ist daher die Aufgabe der vorliegenden Erfindung, die Nachteile des eingangs beschriebenen Standes der Technik zu überwinden.

Die Aufgabe wird erfindungsgemäß gelöst durch das Verfahren gemäß Patentanspruch 1 und die Vorrichtung gemäß Patentanspruch 9.

Das erfindungsgemäße Verfahren zur Verifikation eines, vorzugsweise eichpflichtigen Dichte- und/oder Viskositätsmessgerätes in einer Messstelle einer Prozessanlage während eines laufenden Betriebes, in dem ein Medium, insbesondere ein Kohlenwasserstoff aufweisendes Medium, durch einen Hauptkanal der Prozessanlage strömt, umfasst die folgenden Schritte:

- Bereitstellen eines Nebenkanals, der als Bypass zu dem Hauptkanal geschaltet ist, wobei der Nebenkanal über zwei Bereiche des Hauptkanals mit zueinander unterschiedlichen Durchmessern an den Hauptkanal fluidisch angebunden ist;
- Bereitstellen eines MEMS basierten Master- oder Kontrolldichtemessgerätes in dem Nebenkanal, sodass das MEMS basierte Master- oder Kontrolldichtemessgerät von dem Medium durchströmt wird;
- Durchführen zumindest einer Verifikationsmessung mit dem MEMS basierten Master- oder Kontrolldichtemessgerät;
- Verifikation des Dichte- und/oder Viskositätsmessgerätes anhand der zumindest einen von dem MEMS basierten Master- oder Kontrolldichtemessgerät durchgeführten Verifikationsmessung.

Das erfindungsgemäße Verfahren hat viele Vorzüge gegenüber den oben beschrieben Methoden, beispielsweise:

- Die Verifikationsmessungen erfolgen kontinuierlich unter realen Prozessbedingungen und können bei Bedarf durchgeführt und wiederholt werden.
- Es ist keine spezielle Ausrüstung notwendig, wie Probebehälter für die Messung mit Hydrometer oder Probeflaschen für die nachträgliche Messung im Labor, oder spezielle Anschlüsse, mit Absperrventilen, Druck und Temperatursensoren plus eine Waage mit Referenzgewichten für die Messung mit Druck-Pyknometer im Feld.
- Die Messung ist einfach und weniger fehleranfällig.
- Der Messablauf kann bei Bedarf automatisiert werden.
- Diese Messmethode ist speziell bei Applikationen, in denen sich die Dichte des Mediums schnell verändert sehr vorteilhaft.
- Es geht kein Medium verloren und somit wird auch kein Abfall erzeugt.

Erfindungsgemäß, umfasst das Verfahren ferner den folgenden Schritt:

- Bereitstellen eines in bzw. an dem Hauptkanal angeordneten Hauptkanaladapters, der dazu eingerichtet ist, einen Fluss des Mediums durch den Nebenkanal derartig zu steuern, dass der Nebenkanal von dem Medium nur durchströmt wird, wenn das MEMS basierte Master- oder Kontrolldichtemessgerät an dem Hauptkanaladapter mechanisch angeschlossen ist.

Eine weitere vorteilhafte Ausführungsform des erfindungsgemäßen Verfahrens umfasst ferner den folgenden Schritt:

- Bereitstellen zumindest eines austauschbaren Filterelementes in dem Nebenkanal, vorzugsweise als Teil des Sensoradapters, wobei das Filterelement in Strömungsrichtung vor dem MEMS basierten Master- oder Kontrolldichtemessgerät angeordnet ist, so dass das Medium vor dem Eintritt in das MEMS basierte Master- oder Kontrolldichtemessgerät gefiltert wird.

Insbesondere können die Ausführungsformen vorsehen, dass das MEMS basierte Master- oder Kontrolldichtemessgerät nur für die zumindest eine Verifikationsmessung lösbar an den Hauptkanaladapter angeschlossen und somit von dem Medium durchströmt wird und/oder, dass das MEMS basierte Master- oder Kontrolldichtemessgerät nach der zumindest einen Verifikationsmessung in dem laufenden Betrieb von dem Hauptkanaladapter gelöst wird. Der Hauptkanaladapter wird vorzugsweise bei der Errichtung der Prozessanlage bereitgestellt und entsprechend in dem Hauptkanal angeordnet, sodass er dauerhaft in der Anlage verbleibt. Durch das dauerhafte Verbleiben des Hauptkanaladapters in der Anlage ist das spätere anschließen des Master- oder Kontrolldichtemessgerätes an den Hauptkanaladapter zum Durchführen der Verifikationsmessung ohne Werkzeug möglich.

Eine weitere vorteilhafte Ausführungsform des erfindungsgemäßen Verfahrens sieht vor, dass das MEMS basierte Master- oder Kontrolldichtemessgerät, vorzugsweise wiederkehrend, besonders bevorzugt in einem Labor mit einem Referenzmedium, welches vorzugsweise mittels einer auf nationale Normale rückführbaren Messprozedur ausgemessen wurde, überprüft wird. Insbesondere kann die Ausführungsform vorsehen, dass das MEMS basierte Master- oder Kontrolldichtemessgerät an einer anderen Messstelle zur Verifikation eines anderen Dichte- und/oder Viskositätsmessgerätes eingesetzt wird und die andere Messstelle vorzugsweise einen weiteren Hauptkanaladapter aufweist, an den das MEMS basierte Master- oder Kontrolldichtemessgerät mechanisch angeschlossen wird.

Eine weitere vorteilhafte Ausführungsform des erfindungsgemäßen Verfahrens sieht vor, dass das MEMS basierte Master- oder Kontrolldichtemessgerät verplombt an dem Hauptkanaladapter angebracht wird.

Eine weitere vorteilhafte Ausführungsform des erfindungsgemäßen Verfahrens sieht vor, dass zur Verifikation des Dichte- und/oder Viskositätsmessgerätes auf eine für die Messstelle im laufenden Betrieb repräsentative Temperatur und/oder einen Druck zurückgegriffen wird.

Die Erfindung betrifft weiterhin eine Vorrichtung zur Verifikation eines, vorzugsweise eichpflichtigen Dichte- und/oder Viskositätsmessgerätes in einer Messstelle einer Prozessanlage während eines laufenden Betriebes mittels eines MEMS basierten Master- oder Kontrolldichtemessgerätes, wobei die Messstelle zumindest folgendes aufweist:

- einen Hauptkanal durch den in dem laufenden Betrieb der Prozessanlage ein Medium, insbesondere ein Kohlenwasserstoff strömt, wobei der Hauptkanal zumindest zwei Bereiche mit zueinander unterschiedlichen Durchmessern aufweist;

- das in bzw. an dem Hauptkanal angeordnete Dichte- und/oder Viskositätsmessgerät zur Bestimmung einer primären Dichte- und/oder Viskositätsgröße des Mediums;
- einen Nebenkanal, der in den zwei Bereichen fluidisch an den Hauptkanal derartig angebunden ist, dass der Nebenkanal als Bypass zu dem Hauptkanal geschaltet ist;
- einen in bzw. an dem Hauptkanal angeordneten Hauptkanaladapter, der dazu eingerichtet ist, einen Fluss des Mediums durch den Nebenkanal derartig zu steuern, dass das Medium nur durch den Nebenkanal fließt, wenn das MEMS basierte Master- oder Kontrolldichtemessgerät an den Hauptkanaladapter mechanisch angeschlossen ist;
- das in dem Nebenkanal angeordnete MEMS basierte Master- oder Kontrolldichtemessgerät zur Bestimmung eines Dichte- und/oder Viskositätswerts des Mediums während des laufenden Betriebes, wobei der Dichte- und/oder Viskositätswert zur Verifikation der durch das Dichte- und/oder Viskositätsmessgerät bestimmten primären Dichte- und/oder Viskositätsgröße dient.

Eine vorteilhafte Ausgestaltung der erfindungsgemäßen Vorrichtung weist ferner einen den MEMS basierten Master- oder Kontrolldichtemessgerät umfassenden Sensoradapter auf, wobei der Sensoradapter und der Hauptkanaladapter derartig aufeinander angepasst sind, dass der Sensoradapter mechanisch lösbar an den Hauptkanaladapter anschließbar ist und ferner, dass nur in einem angeschlossenen Zustand das Medium durch den im Hauptkanaladapter und Sensoradapter ausgebildeten Nebenkanal strömt.

Insbesondere kann die Ausgestaltung vorsehen, dass der Sensoradapter ferner zumindest ein austauschbares Filterelement aufweist, welches in Strömungsrichtung vor dem MEMS basierten Master- oder Kontrolldichtemessgerät angeordnet ist, sodass das Medium vor dem Eintritt in das MEMS basierte Master- oder Kontrolldichtemessgerät gefiltert wird und/oder, dass der Sensoradapter einen, vorzugsweise seitlich zugänglichen Filterhalter aufweist, der dazu ausgebildet ist, das Filterelement in einer Einbauposition in dem Sensoradapter zu halten, sodass das Filterelement von dem Medium durchströmt wird und ferner dazu ausgebildet ist, bei Bedarf das Filterelement, vorzugsweise seitlich auszugeben, sodass das Filterelement getauscht werden kann.

Eine weitere vorteilhafte Ausgestaltung der erfindungsgemäßen Vorrichtung umfasst ferner eine weitere Messstelle mit einem weiteren Hauptkanaladapter zum mechanischen und fluidischen anschließen des MEMS basierten Master- oder Kontrolldichtemessgerätes.

Eine weitere vorteilhafte Ausgestaltung der erfindungsgemäßen Vorrichtung weist ferner einen Flowcomputer auf, der dazu eingerichtet ist, die durch das Dichte- und/oder Viskositätsmessgerät ermittelte primäre Dichte- und/oder Viskositätsgröße des Mediums anhand des durch das MEMS basierte Master- oder Kontrolldichtemessgerät ermittelten Dichte- und/oder Viskositätswerts des Mediums in dem laufenden Betrieb der Prozessanlage zu verifizieren.

Insbesondere kann die Ausgestaltung ferner ein Temperatur- und/oder Druckmessgerät zur Bestimmung einer für das durch die Messstelle strömende Medium repräsentativen Temperatur und/oder eines Drucks aufweisen, wobei die Temperatur und/oder der Druck dem Flowcomputer zugeführt ist und der Flowcomputer ferner dazu eingerichtet ist, die für die Messstelle repräsentative Temperatur und/oder den Druck zur Verifikation der primären Dichte- und/oder Viskositätsgröße heranzuziehen.

Eine weitere vorteilhafte Ausgestaltung der erfindungsgemäßen Vorrichtung sieht vor, dass der Hauptkanaladapter und der Sensoradapter ein Schnellkupplungssystem aufweisen, welche eine fluidische Anbindung eines in dem Hauptkanaladapter ausgebildeten Teile des Nebenkanals an einen in dem Sensoradapter ausgebildeten Teil des Nebenkanals realisiert. Insbesondere kann die Vorrichtung vorsehen, dass das Schnellkupplungssystem derartig ausgebildet ist, dass die beiden Teile des Nebenkanals nach der fluidischen Anbindung wieder trennbar voneinander sind. Das Schnellkupplungssystem kann ferner so ausgebildet sein, dass die beiden Teile des Nebenkanals im laufenden Betrieb unter Druck miteinander fluidisch angebunden werden können, wenn der Sensoradapter mechanisch auf den Hauptkanaladapter angebracht wird. Hierbei wird für die Montage und Demontage des Sensoradapters im Feld kein Werkzeug benötigt.

Die Erfindung wird anhand der nachfolgenden Zeichnungen näher erläutert. Es zeigt:

Fig. 1: eine schematische Darstellung eines ersten allgemeinen Ausführungsbeispiels der Erfindung,

Fig. 2 a) und b): eine schematische Darstellung eines zweiten im größerem Detail dargestellten Ausführungsbeispiels der Erfindung, und

Fig. 3: einen schematisch dargestellten Verfahrensablauf des erfindungsgemäßen Verfahrens.

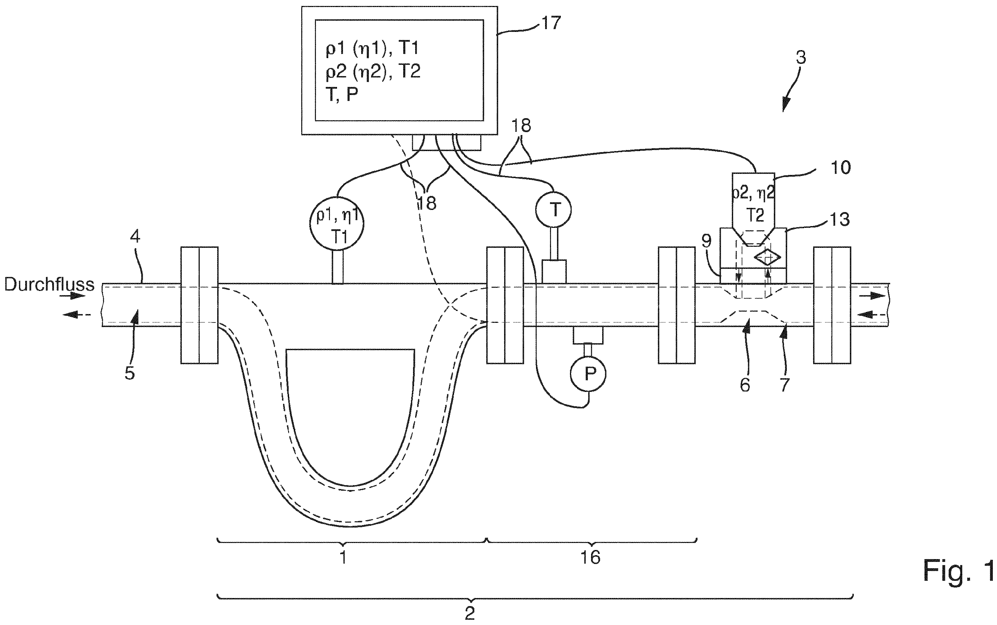

Figur 1 zeigt exemplarisch einen Ausschnitt einer Prozessanlage 3 in der ein Prozess ausgeführt wird. Die Prozessanlage 3 umfasst in einem Teilabschnitt ein Dichte- und/oder Viskositätsmessgerät 1, bspw. einen Promass Q der Firma Endress + Hauser. Selbstverständlich kann es sich hierbei auch um ein anderes Coriolisdurchfluss- und/oder Dichte- und/oder Viskositätsmessgerät handeln. Das Dichte- und/oder Viskositätsmessgerät 1 dient dazu, in einem

Eichbetrieb die Dichte $\rho_1$ und/oder Viskosität $\eta_1$ des Mediums an einer Messstelle 2 der Prozessanlage 3 zu erfassen. Ferner kann das Dichte- und/oder Viskositätsmessgerät 1 dazu dienen, eine erste Temperatur $T_1$ zu erfassen, die vorzugsweise zur Ermittlung der Dichte $\rho_1$ und/oder Viskosität $\eta_1$ verwendet wird. An das Dichte- und/oder Viskositätsmessgerät 1 schließt sich ein Temperatur- und Druckmessgerät 16 an, welches dazu ausgebildet ist, eine für das durch die Messstelle strömende Medium repräsentative Temperatur T und einen Druck p zu ermitteln. An diese Messeinheit bestehend aus Dichte- und/oder Viskositätsmessgerät 2 und Temperatur- und Druckmessgerät 16 schließt sich wiederum ein über einen Hauptkanaladapter 9 angebundenes MEMS basiertes Master- oder Kontrolldichtemessgerät 10 an, welches dazu ausgebildet ist, eine Verifikationsdichte $\rho_2$ und/oder Verifikationsviskosität $\eta_2$ zu bestimmen. Ferner kann das Master- oder Kontrolldichtemessgerät eine zweite Temperatur $T_2$ erfassen, die vorzugsweise zur Ermittlung der Dichte $\rho_2$ und/oder Viskosität $\eta_2$ verwendet wird. Das MEMS basierte Master- oder Kontrolldichtemessgerät 10 ist im Gegensatz zu den beiden anderen Messgeräten nur temporär in die Messstelle eingebracht, um eine Verifikation des im Eichbetrieb arbeitenden Dichte- und/oder Viskositätsmessgerät 10 durchzuführen. Die Prozessanlage 3 kann ferner einen Mengenumwerter 17 umfassen, nachfolgend auch Flowcomputer bezeichnet, der dazu eingerichtet ist, in dem Eichbetrieb einen Volumenstrom des Mediums durch die Messstelle in einem Normzustand zu berechnen. Hierzu sind dem Flowcomputer 17 die durch das Dichte- und/oder

Viskositätsmessgerät 1 ermittelte Dichte $\rho_1$, Viskosität $n_1$ und ggfl. erste Temperatur $T_1$ sowie die durch das Temperatur- und Druckmessgerät 16 ermittelte Temperatur T und Druck p zugeführt. Ferner ist dem Flowcomputer 17 zur Verifikation des eichpflichtigen Dichte- und/oder Viskositätsmessgerätes 1 die durch das MEMS basierte Master- oder Kontrolldichtemessgerät 10 ermittelte Verifikationsdichte $\rho_2$ und/oder Verifikationsviskosität $n_2$ sowie ggfls. die zweite Temperatur $T_2$ zugeführt. Die Anbindung der Messgeräte kann bspw. über eine digitale oder analoge Schnittstelle 18 an den Geräten und des Flowcomputers erfolgen. Der Flowcomputer 17 ist ferner dazu eingerichtet, eine Verifikation der durch das Dichte- und/oder Viskositätsmessgerät ermittelten Dichte und/oder Viskosität anhand der durch das temporär angebundene MEMS basierte Master- oder Kontrolldichtemessgerät ermittelten Verifikationsdichte $\rho_2$ und/oder Verifikationsviskosität $\eta_2$, der ermittelten Temperaturen $T_1$, T und $T_2$ und dem Druck p durchzuführen.

Da alle Messungen im Wesentlichen gleichzeitig erfolgen, kann davon ausgegangen werden, dass das Medium dasselbe war. Und es kann für jedes Messpunkteset ein Messfehler bei den aktuell herrschenden Messbedingungen (T,p, $\rho$, $\eta$, ...) nach Formel 1 ermittelt werden:

$$e\_\rho_1 (T,p, \rho, \eta, \ldots) = \rho_1 - \rho_2 - A * (T_1 - T_2) - B(p_1 - p_2) \tag{1}$$

wobei $e\_\rho_1$ ein prozessbedingungsabhängiger Messfehler, A der Temperatur- und B der Druck-Koeffizient des Mediums der Dichte $\rho_1$ bei den aktuellen Prozessbedingungen T und p ist.

Auf eine Kompensation des Druckunterschiedes der zwei Dichtesensoren kann typischerweise verzichtet werden, da der Einfluss des Druckes (für Benzin ist B = 0.08 kg/m$^3$ bar$^{-1}$) auf die Fluiddichte klein ist und die Messung bei praktisch gleichem Druck p erfolgt, sodass sich Formel 2 ergibt:

$$e\_\rho_1 (T,p, \rho, \eta, ..) = \rho_1 - \rho_2 - A * (T_1 - T_2) \tag{2}$$

Die Temperaturkompensation macht bei Temperaturabweichungen von >0.1 K Sinn (für Benzin ist A = -0.9 kg/m$^3$ K$^{-1}$). Bei kleineren Temperaturdifferenzen als 0.1K vereinfacht sich die Formel nochmals zu:

$$e\_\rho_1 (T,p, \rho, \eta, ..) = \rho_1 - \rho_2 \tag{3}$$

Alle ermittelten prozessbedingungsabhängigen Messfehler können im Flowcomputer hinterlegt und zur Kompensation zukünftiger Dichte- bzw Viskositätsmessungen verwendet werden. Dabei wird zur Ermittlung des Messfehlers bei einer Messung bei Prozessbedingungen, bei welcherkein Verifikationspunkt vorhanden ist, zwischen den jeweils benachbarten Verifikationspunkten interpoliert.

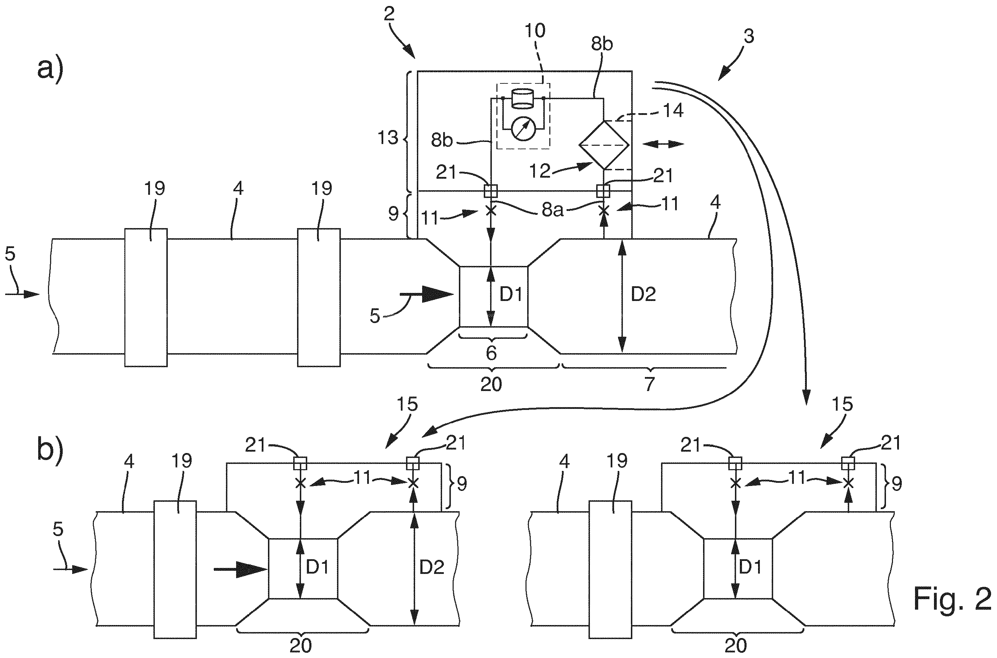

Fig. 2 a) und b) zeigen ein zweites Ausführungsbeispiel der Erfindung, in dem mehrere Messstellen 2, 15 exemplarisch dargestellt sind. Die Messstellen 2, 15 sind jeweils in einen Hauptkanal 4, durch den in dem laufenden Betrieb der Prozessanlage ein Medium 5 strömt, eingebracht. Die Messstellen sind hierbei für gewöhnlich nicht fluidisch miteinander verbunden, sondern in mehreren unterschiedlichen Fluidpfaden in unterschiedlichen Teilen der Anlage eingebaut, welche meist mit unterschiedlichen Medien betrieben werden.

Die Medien weisen üblicherweise einen Kohlenwasserstoff auf. Beispiele sind Rohöl, Benzin, Kerosin, Petrol, Diesel, Heizöl, Schweröl, Mineralöl, Schmieröl, Biodiesel, Ethanol, Methanol, Speiseöl, etc.. Die Hauptkanäle 4 sind im Bereich der Messstellen durch eine Querschnittsveränderung 20 derartig ausgebildet, dass zumindest zwei Bereiche 6, 7 mit zueinander unterschiedlichen Durchmessern $D_1$, $D_2$ vorhanden sind. In dem Hauptkanal 4 ist für jede Messstelle 2, 15 jeweils mindestens eine Messeinheit 19 bestehend aus einem Dichte- und/oder Viskositätsmessgerät 1 zur Bestimmung einer primären Dichte- und/oder Viskositätsgröße des Mediums 5 und einem Temperatur- und Druckmessgerät 16 angeordnet.

Die Messstellen 2, 15 umfassen ferner jeweils einen Hauptkanaladapter 9, der mechanisch an den Hauptkanal, bspw. mittels einer Verschraubung (in Fig. 2 a) und b) nicht gesondert dargestellt), angebracht ist. In den Hauptkanaladapter 9 ist, bspw. durch entsprechende Bohrungen, ein Teil des jeweiligen Nebenkanals 8a ausgebildet. Der Hauptkanaladapter 9 ist derartig an dem Hauptkanal angeordnet, dass die beiden in dem Hauptkanaladapter ausgebildeten Teile des Nebenkanals 8a an den zwei Bereichen mit unterschiedlichem Durchmesser von dem Hauptkanal fluidisch angebunden sind.

Auf einen an den Hauptkanal 4 angebrachten Hauptkanaladapter 9 kann, wie in der in Fig. 2 rechts dargestellten Messstelle, ein Sensoradapter 13 angebracht werden. Der Sensoradapter 13 umfasst das zur Verifikation temporär angebrachte MEMS basierte Master- oder Kontrolldichtemessgerät 10. Hierzu sind der Sensoradapter 13 und der Hauptkanaladapter 9 derartig aufeinander angepasst, dass der Sensoradapter 13 mechanisch lösbar an den Hauptkanaladapter 9 anschließbar ist. Für eine fluidische Anbindung des in dem Hauptkanaladapter ausgebildeten Teil des Nebenkanals 8a an den in dem Sensoradapter 13 fortgesetzten Teil des Nebenkanals 8a kann ferner ein Schnellkupplungssystem vorgesehen sein, welches ein fluidisches Anbinden der beiden Nebenkanalteile in dem laufenden Betrieb zulässt. Das Schnellkupplungssystem ist derartig ausgebildet, dass die beiden Teile des Nebenkanals 8a, 8b, wenn der Sensoradapter mechanisch von dem Hauptkanaladapter gelöst wird, wieder fluidisch getrennt werden können. Ferner umfasst der Hauptkanaladapter 9 zwei Ventile 11, die bei einem angeschlossenen Master- oder Kontrolldichtemessgerät 10 in eine Offenstellung geschaltet werden, sodass das Medium 5 durch den im Hauptkanaladapter 9 ausgebildeten Teil des Nebenkanal 8a und im Sensoradapter 13 fortgesetzten Teil des Nebenkanals 8a strömen kann und die bei einem nicht angeschlossenen Master- oder Kontrolldichtemessgerät 10 in eine Schließstellung geschaltet werden, sodass kein Medium austreten kann.

Dies bedeutet, dass die Ventile derartig ausgebildet und in dem Hauptkanaladapter angeordnet sind, dass das Medium nur durch den Nebenkanal fließt, wenn ein MEMS basiertes Master- oder Kontrolldichtemessgerät 10 an dem Hauptkanaladapter 9 mechanisch angeschlossen ist. Ferner bedeutet dies auch, dass der Nebenkanal 8a, 8b einen Bypass zu dem Hauptkanal 4 darstellt. Durch die konkrete Ausgestaltung der Querschnittsveränderung lässt sich die Flussrichtung des Mediums durch den Nebenkanal 8a, 8b festlegen. Gemäß dem in Fig. 2 a) dargestellten und bevorzugten Beispiel, ist die Querschnittsveränderung des Hauptkanals so ausgebildet, dass das Medium 3 zunächst durch einen Bereich mit einem kleineren Durchmesser $D_1$ strömt bevor es durch einen Bereich mit einem größeren Durchmesser $D_2$ strömt. Die hat zur Folge, dass das Medium 3 entgegen der Strömungsrichtung in dem Hauptkanal 4 durch den Nebenkanal 8a, 8b strömt, wenn die Ventile 11 geöffnet sind. In den Fig. 2 a) und b) ist dies durch zwei die Strömungsrichtung in dem Nebenkanal angebende Pfeile dargestellt. Alternativ kann die Querschnittsveränderung 20 aber auch gerade umgekehrt ausgebildet sein, so dass das Medium 3 zunächst durch einen Bereich mit einem größeren Durchmesser strömt bevor es durch einen Bereich mit einem kleineren Durchmesser strömt. Dies ist beispielsweise der Fall, wenn die Strömung im Hauptkanal in die Gegenrichtung zu der in Fig. 2 a) angegebenen fliest. In diesem Fall würde das Medium 3 in gleicher Richtung wie in dem Hauptkanal durch den Nebenkanal strömen, so dass der Nebenkanal immer in der gleichen Richtung durchströmt wird, unabhängig von der Strömungsrichtung in dem Hauptkanal.

Um das MEMS basierte Master- oder Kontrolldichtemessgerät 10 vor möglichen Partikeln im Medium 3 zu schützen kann zumindest ein Filterelement 12 in dem Sensoradapter 13 vorgesehen sein. Um das Filterelement 12 austauschen zu können, kann eine Filterhalterung 14 vorgesehen sein, über die das Filterelement 12 in einer vorbestimmten Einbauposition in dem Sensoradapter 13 gehalten wird. Die vorbestimmte Einbauposition ist derartig in dem Sensoradapter festgelegt, dass in Strömungsrichtung gesehen das Filterelement in dem Nebenkanal vor dem MEMS basierten Master- oder Kontrolldichtemessgerät 10 angeordnet ist. Ferner kann das Filterelement 12 zum Austausch über die Filterhalterung 14 aus der vorbestimmten Position gelöst und bspw. seitlich aus dem Sensoradapter 13 herausgeführt werden.

Fig. 2 a) zeigt eine Messstelle 2, in der das MEMS basierte Master- oder Kontrolldichtemessgeräte 10 kurzfristig zum Durchführen einer Verifikationsmessung über den Hauptkanaladapter in die Messstelle mit zwei in Serie (redundant) angeordneten Messeinheiten 19 eingebracht wurde. Ferner sind in Fig.2 b) zur Verdeutlichung eines Aspektes der Erfindung zwei weitere Messstellen 15 dargestellt, die vorzugsweise bei der Errichtung der Prozessanlage eingebracht wurden, so dass sie für ein späteres temporäres Anbringen des MEMS basierten Master- oder Kontrolldichtemessgeräts vorbereitet sind. Auf diese Weise können die weiteren Messstellen 15 mit Hilfe des gleichen Master- oder Kontrolldichtemessgerätes 10 verifiziert werden. In Fig. 2 a) und b) ist dies durch einen Pfeil dargestellt. Ein Vorteil der Erfindung besteht somit darin, dass mittels eines einzigen MEMS basierten Master- oder Kontrolldichtemessgerätes 10 eine Verifikation mehrerer beliebiger Dichte- und/oder Viskositätsmessgeräte in der Prozessanlage durchgeführt werden kann.

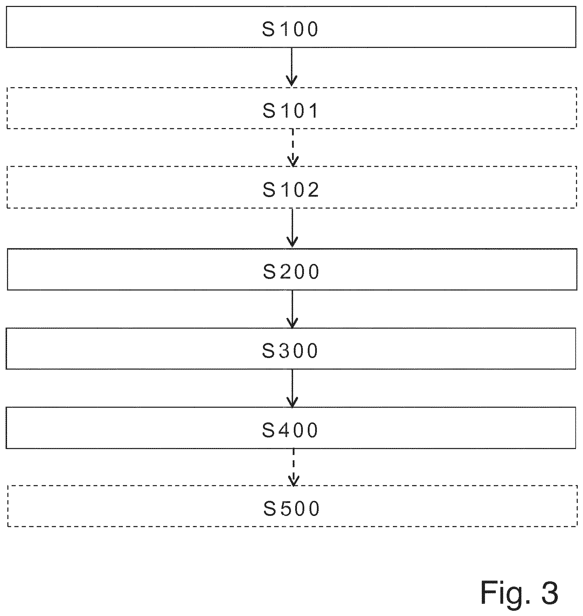

Fig. 3 zeigt einen schematisch dargestellten Verfahrensablauf des erfindungsgemäßen Verfahrens zur Verifikation eines Dichte- und/oder Viskositätsmessgerätes. Das Dichte- und/oder Viskositätsmessgerät befindet sich in einer Messstelle einer Prozessanlage und dient zur Bestimmung einer Dichte und/oder Viskosität eines Mediums, welches in einem laufenden Betrieb der Prozessanlage durch den Hauptkanal strömt.

Das Verfahren sieht in einem ersten Verfahrensschritt S100 vor, dass zunächst ein Nebenkanal, der fluidisch als Bypass zu einem Hauptkanal ausgebildet ist, bereitgestellt wird. Der Nebenkanal wird insbesondere durch einen zuvor beschriebenen Hauptkanaladapter bereitgestellt, der in einem eine Querschnittsveränderung aufweisenden Abschnitt der Hauptleitung, bspw. mit Hilfe zweier Flansche, angebracht ist. Der Hauptkanaladapter ist vorzugsweise dazu eingerichtet, einen Fluss des Mediums durch den Nebenkanal derartig zu steuern, dass das Medium nur durch den Nebenkanal strömt, wenn das MEMS basierte Master- oder Kontrolldichtemessgerät an den Hauptkanaladapter angeschlossen ist. Dies kann bspw. durch zwei Ventile, vorzugsweise Rückschlagventile, die in dem im Hauptkanaladapter ausgebildeten Teil des Nebenkanals angeordnet sind, realisiert sein.

Um das MEMS basierte Master- oder Kontrolldichtemessgerät vor einer möglichen Verschmutzung durch bspw. Partikel in dem Medium zu schützen kann in einem optionalen Zwischenschritt S102 ein austauschbares Filterelement in dem Nebenkanal in Strömungsrichtung vor dem MEMS basierten Master- oder Kontrolldichtemessgerät angeordnet werden.

Das Verfahren sieht ferner in einem zweiten Verfahrensschritt S200 vor, dass durch das mechanisch lösbare Anbringen eines Sensoradapters auf dem Hauptkanaladapter ein MEMS basiertes Master- oder Kontrolldichtemessgerät für eine Verifikationsmessung bereitgestellt wird. Vorzugsweise wird das MEMS basierte Master- oder Kontrolldichtemessgerät lediglich temporär bzw. kurzfristig zur Durchführung der Verifikationsmessung in der Messstelle bereitgestellt. Nach der Verifikationsmessung kann das MEMS basierte Master- oder Kontrolldichtemessgerät wieder von der Messstelle entfernt und bspw. an einer anderen Messstelle für eine andere Verifikationsmessung eingesetzt werden.

In einem dritten Verfahrensschritt S300 sieht das erfindungsgemäße Verfahren vor, dass zumindest eine Verifikationsmessung mit dem MEMS basierten Master- oder Kontrolldichtemessgerät in der Messstelle während des laufenden Betriebes durchgeführt wird. Durch die Verifikationsmessung wird eine Verifikationsdichte und/oder eine Verifikationsviskosität durch das MEMS basierte Master- oder Kontrolldichtemessgerät ermittelt. Die Verifikationsdichte und/oder die Verifikationsviskosität wird an einen Flowcomputer übertragen, dem auch die Dichte und/oder Viskosität durch das zu verifizierende Dichte- und/oder Viskositätsmessgerätes zugeführt sind. Die Übertragung der Verifikationsdichte und/oder der Verifikationsviskosität kann sowohl elektronisch über eine Schnittstelle an den Flowcomputer übertragen werden, als auch manuell, bspw. händisch oder mittels einem anderen mit dem Flowcomputer nicht zusammenarbeitenden Computerprogramm.

In einem nächsten Verfahrensschritt S400 wird eine Verifikation des Dichte- und/oder Viskositätsmessgerätes anhand der zuvor von dem MEMS basierten Master- oder Kontrolldichtemessgerät durchgeführten Verifikationsmessung durchgeführt. Vorzugsweise erfolgt die Verifikation durch den Flowcomputer.

In einem letzten ggfls. auch ersten optionalen Schritt erfolgt die Überprüfung des Master- oder Kontrolldichtemessgerätes im Labor mit einem Referenzmedium (S500), welches mittels einer auf nationale Normale rückführbaren Messprozedur ausgemessen wurde.

**Bezugszeichenliste**

| | |
|---|---|
| 1 | Dichte- und/oder Viskositätsmessgerätes |
| 2 | Messstelle |
| 3 | Prozessanlage |
| 4 | Hauptkanal |
| 5 | Medium |
| 6 | Erster Bereich des Hauptkanals |
| 7 | Zweiter Bereich des Hauptkanals |
| 8a, 8b | Nebenkanal |
| 9 | Hauptkanaladapter |
| 10 | MEMS basiertes Master- oder Kontrolldichtemessgerät |
| 11 | Ventile |
| 12 | Filterelement |
| 13 | Sensoradapter |
| 14 | Filterhalterung |
| 15 | Weitere Messstelle |
| 16 | Temperatur- und Druckmessgerät |
| 17 | Mengenumwerter bzw. Flowcomputer |
| 18 | Schnittstelle |
| 19 | Messeinheit |

| 20 | Querschnittsveränderung |
|---|---|
| 21 | Schnellkupplungssystem |
| D1 | Erster Durchmesser |
| D2 | Zweiter Durchmesser |
| T | Für die Messstelle maßgebliche Temperatur (aktuelle Prozessbedingung) |
| p | Für die Messstelle maßgeblicher Druck (aktuelle Prozessbedingung) |
| $T_1$ | Erste Temperatur |
| $T_2$ | Verifikationstemperatur bzw. zweite Temperatur |
| $\rho_1$ | Dichte |
| $\eta_1$ | Viskosität |
| $\rho_2$ | Verifikationsdichte |
| $\eta_2$ | Verifikationsviskosität |
| S100 - S500 | Verfahrensschritte |

**Patentansprüche**

1. Verfahren zur Verifikation eines, eichpflichtigen Dichte- und/oder Viskositätsmessgerätes in einer Messstelle einer Prozessanlage während eines laufenden Betriebes, indem ein Medium, insbesondere ein Kohlenwasserstoff aufweisendes Medium, durch einen Hauptkanal der Prozessanlage strömt, umfassend die folgenden Schritte:

   - Bereitstellen eines Nebenkanals, der als Bypass zu dem Hauptkanal geschaltet ist, wobei der Nebenkanal über zwei Bereiche des Hauptkanals mit zueinander unterschiedlichen Durchmessern an den Hauptkanal fluidisch angebunden ist (S100);
   - Bereitstellen eines MEMS basierten Master- oder Kontrolldichtemessgerätes in dem Nebenkanal, sodass das MEMS basierte Master- oder Kontrolldichtemessgerät von dem Medium durchströmt wird (S200);
   - Bereitstellen eines in bzw. an dem Hauptkanal angeordneten Hauptkanaladapters, der dazu eingerichtet ist, einen Fluss des Mediums durch den Nebenkanal derartig zu steuern, dass der Nebenkanal von dem Medium nur durchströmt wird, wenn das MEMS basierte Master- oder Kontrolldichtemessgerät an den Hauptkanaladapter mechanisch angeschlossen ist (S101);
   - Durchführen zumindest einer Verifikationsmessung mit dem MEMS basierten Master- oder Kontrolldichtemessgerät (S300);
   - Verifikation des Dichte- und/oder Viskositätsmessgerätes anhand der zumindest einen von dem MEMS basierten Master- oder Kontrolldichtemessgerät durchgeführten Verifikationsmessung (S400).

2. Verfahren nach Anspruch 1, ferner umfassend den folgenden Schritt:

   - Bereitstellen zumindest eines austauschbaren Filterelementes in dem Nebenkanal, vorzugsweise als Teil des Sensoradapters, wobei das Filterelement in Strömungsrichtung vor dem MEMS basierten Master- oder Kontrolldichtemessgerät angeordnet ist, sodass das Medium vor dem Eintritt in das MEMS basierte Master- oder Kontrolldichtemessgerät gefiltert wird (S102).

3. Verfahren nach Anspruch 1 or 2, wobei das MEMS basierte Master- oder Kontrolldichtemessgerät nur für die zumindest eine Verifikationsmessung lösbar an den Hauptkanaladapter angeschlossen und somit von dem Medium durchströmt wird.

4. Verfahren nach dem vorhergehenden Anspruch, wobei das MEMS basierte Master- oder Kontrolldichtemessgerät nach der zumindest einen Verifikationsmessung in dem laufenden Betrieb von dem Hauptkanaladapter gelöst wird.

5. Verfahren nach einem der vorhergehenden Ansprüche, wobei das MEMS basierte Master- oder Kontrolldichtemessgerät, vorzugsweise wiederkehrend, besonders bevorzugt in einem Labor mit einem Referenzmedium, welches vorzugsweise mittels einer auf nationale Normale rückführbaren Messprozedur ausgemessen wurde, überprüft wird (S500).

6. Verfahren nach einem der vorhergehenden Ansprüche, wobei das MEMS basierte Master- oder Kontrolldichtemessgerät an einer anderen Messstelle zur Verifikation eines anderen Dichte- und/oder Viskositätsmessgerätes eingesetzt wird und die andere Messstelle vorzugsweise einen weiteren Hauptkanaladapter aufweist, an den das MEMS basierte Master- oder Kontrolldichtemessgerät mechanisch angeschlossen wird.

**7.** Verfahren nach einem der Ansprüche 1, 2 oder 6, wobei das MEMS basierte Master- oder Kontrolldichtemessgerät verplombt an dem Hauptkanaladapter angebracht wird.

**8.** Verfahren nach einem der vorhergehenden Ansprüche, wobei zur Verifikation des Dichte- und/oder Viskositätsmessgerätes auf eine für die Messstelle im laufenden Betrieb repräsentative Temperatur und/oder einen Druck zurückgegriffen wird.

**9.** Vorrichtung zur Verifikation eines, eichpflichtigen Dichte- und/oder Viskositätsmessgerätes (1) in einer Messstelle (2) einer Prozessanlage (3) während eines laufenden Betriebes mittels eines MEMS basierten Master- oder Kontrolldichtemessgerätes (10), wobei die Messstelle (2) zumindest folgendes aufweist:

- einen Hauptkanal (4) durch den in dem laufenden Betrieb der Prozessanlage ein Medium (5), insbesondere ein Kohlenwasserstoff aufweisendes Medium strömt, wobei der Hauptkanal (4) zumindest zwei Bereiche (6, 7) mit zueinander unterschiedlichen Durchmessern ($D_1$, $D_2$) aufweist;
- das in bzw. an dem Hauptkanal (4) angeordnete Dichte- und/oder Viskositätsmessgerät (1) zur Bestimmung einer primären Dichte- und/oder Viskositätsgröße des Mediums (5);
- einen Nebenkanal (8a, 8b), der in den zwei Bereichen (6, 7) fluidisch an den Hauptkanal (4) derartig angebunden ist, dass der Nebenkanal (8a, 8b) als Bypass zu dem Hauptkanal (4) geschaltet ist;
- das in dem Nebenkanal (8a, 8b) angeordnete MEMS basierte Master- oder Kontrolldichtemessgerät (10) zur Bestimmung eines Dichte- und/oder Viskositätswerts des Mediums (5) während des laufenden Betriebes, wobei der Dichte- und/oder Viskositätswert zur Verifikation der durch das Dichte- und/oder Viskositätsmessgerät (1) bestimmten primären Dichte- und/oder Viskositätsgröße dient;

die Vorrichtung **dadurch gekennzeichnet, dass** sie ferner Folgendes umfasst:

- einen in bzw. an dem Hauptkanal (4) angeordneten Hauptkanaladapter (9) der dazu eingerichtet ist, einen Fluss des Mediums durch den Nebenkanal derartig zu steuern, dass der Nebenkanal von dem Medium nur durchströmt wird, wenn das MEMS basierte Master- oder Kontrolldichtemessgerät an den Hauptkanaladapter mechanisch angeschlossen ist.

**10.** Vorrichtung nach dem vorhergehenden Anspruch, ferner aufweisend einen den MEMS basierten Master- oder Kontrolldichtemessgerät (10) umfassenden Sensoradapter (13), wobei der Sensoradapter (13) und der Hauptkanaladapter (9) derartig aufeinander angepasst sind, dass der Sensoradapter (13) mechanisch lösbar an den Hauptkanaladapter anschließbar ist und ferner, dass nur in einem angeschlossenen Zustand das Medium (5) durch den im Hauptkanaladapter (9) und Sensoradapter (13) ausgebildeten Nebenkanal (8) strömt.

**11.** Vorrichtung nach dem vorhergehenden Anspruch, wobei der Sensoradapter (13) ferner zumindest ein austauschbares Filterelement (12) aufweist, welches in Strömungsrichtung vor dem MEMS basierten Master- oder Kontrolldichtemessgerät (10) angeordnet ist, sodass das Medium (5) vor dem Eintritt in das MEMS basierte Master- oder Kontrolldichtemessgerät (10) gefiltert wird.

**12.** Vorrichtung nach dem vorhergehenden Anspruch, wobei der Sensoradapter einen, vorzugsweise seitlich zugänglichen Filterhalter (14) aufweist, der dazu ausgebildet ist, das Filterelement in einer Einbauposition in dem Sensoradapter (13) zu halten, sodass das Filterelement (12) von dem Medium (5) durchströmt wird und ferner dazu ausgebildet ist, bei Bedarf das Filterelement (12), vorzugsweise seitlich auszugeben, sodass das Filterelement (12) getauscht werden kann.

**13.** Vorrichtung nach einem der Ansprüche 9 bis 12, ferner aufweisend eine weitere Messstelle (15) mit einem weiteren Hauptkanaladapter zum mechanischen und fluidischen anschließen des MEMS basierten Master- oder Kontrolldichtemessgerätes.

**14.** Vorrichtung nach einem der Ansprüche 9 bis 13, ferner aufweisend einen Flowcomputer, der dazu eingerichtet ist, die durch das Dichte- und/oder Viskositätsmessgerät ermittelte primäre Dichte- und/oder Viskositätsgröße des Mediums anhand des durch das MEMS basierte Master- oder Kontrolldichtemessgerät ermittelten Dichte- und/oder Viskositätswerts des Mediums in dem laufenden Betrieb der Prozessanlage zu verifizieren.

**15.** Vorrichtung nach dem vorhergehenden Anspruch, ferner aufweisend ein Temperatur- und/oder Druckmessgerät zur Bestimmung einer für das durch die Messstelle strömende Medium repräsentativen Temperatur und/oder eines Drucks, wobei die Temperatur und/oder der Druck dem Flowcomputer zugeführt ist und der Flowcomputer ferner dazu eingerichtet ist, die für die Messstelle repräsentative Temperatur und/oder den Druck zur Verifikation der primären Dichte- und/oder Viskositätsgröße heranzuziehen.

16. Vorrichtung nach einem der Ansprüche 10 bis 15, wobei der Hauptkanaladapter und der Sensoradapter ein Schnellkupplungssystem (21) aufweisen, welche eine fluidische Anbindung eines in dem Hauptkanaladapter ausgebildeten Teil des Nebenkanals (8a) an einen in dem Sensoradapter 13 ausgebildeten Teil des Nebenkanals (8b) realisiert.

17. Vorrichtung nach dem vorhergehenden Anspruch, wobei das Schnellkupplungssystem derartig ausgebildet ist, dass die beiden Teile des Nebenkanals (8a, 8b) nach der fluidischen Anbindung wieder trennbar voneinander sind.

**Claims**

1. Method for verifying a density and/or viscosity measuring device subject to calibration requirements at a measuring point of a process plant during ongoing operation, wherein a medium, in particular a hydrocarbon-containing medium, flows through a main channel of the process plant, comprising the following steps:

   • Providing a bypass channel that is connected to the main channel and fluidically linked to two regions of the main channel having different diameters (S100);
   • Providing a MEMS-based master or control density measuring device in the bypass channel such that the MEMS-based master or control density measuring device is flowed through by the medium (S200);
   • Providing a main channel adapter arranged in or on the main channel, which is configured to control the flow of the medium through the bypass channel in such a way that the bypass channel is only flowed through by the medium when the MEMS-based master or control density measuring device is mechanically connected to the main channel adapter (S101);
   • Carrying out at least one verification measurement with the MEMS-based master or control density measuring device (S300);
   • Verifying the density and/or viscosity measuring device based on the at least one verification measurement performed by the MEMS-based master or control density measuring device (S400).

2. Method according to claim 1 or 2, further comprising the following step:

   • Providing at least one replaceable filter element in the bypass channel, preferably as part of the sensor adapter, the filter element being arranged upstream of the MEMS-based master or control density measuring device in the direction of flow, so that the medium is filtered before entering the MEMS-based master or control density measuring device (S102).

3. Method according to claim 2 or 3, wherein the MEMS-based master or control density measuring device is detachably connected to the main channel adapter only for the at least one verification measurement and is thus flowed through by the medium.

4. Method according to the preceding claim, wherein the MEMS-based master or control density measuring device is detached from the main channel adapter after the at least one verification measurement during ongoing operation.

5. Method according to one of the preceding claims, wherein the MEMS-based master or control density measuring device is checked, preferably repeatedly and particularly preferably in a laboratory, using a reference medium that has preferably been measured using a measurement procedure traceable to national standards (S500).

6. Method according to one of the preceding claims, wherein the MEMS-based master or control density measuring device is used at another measuring point to verify another density and/or viscosity measuring device, and the other measuring point preferably has an additional main channel adapter to which the MEMS-based master or control density measuring device is mechanically connected.

7. Method according to one of claims 1 to 3 or 7, wherein the MEMS-based master or control density measuring device is sealed (tamper-proof) when attached to the main channel adapter.

8. Method according to one of the preceding claims, wherein a temperature and/or pressure representative of the measuring point during ongoing operation is used for verifying the density and/or viscosity measuring device.

9. Device for verifying a density and/or viscosity measuring device (1) subject to calibration requirements at a measuring point (2) of a process plant (3) during ongoing operation using a MEMS-based master or control density measuring device (10), wherein the measuring point (2) comprises at least the following:

   • a main channel (4) through which, during ongoing operation of the process plant, a medium (5), in particular a hydrocarbon-containing medium, flows, the main channel (4) having at least two regions (6, 7) with different diameters (D1, D2);
   • the density and/or viscosity measuring device (1) arranged in or on the main channel (4) to determine a primary density and/or viscosity value of the medium (5);
   • a bypass channel (8a, 8b) that is fluidically connected to the main channel (4) in the two regions (6, 7) such that the bypass channel (8a, 8b) is configured as a bypass to the main channel (4);
   • a main channel adapter (9) arranged in or on the main channel (4), which is configured to control a flow of the medium through the bypass channel such that the bypass channel is only flowed through by the medium when the MEMS-based master or control density measuring device is mechanically connected to the main channel adapter;
   • the MEMS-based master or control density measuring device (10) arranged in the bypass channel (8a, 8b) for determining a density and/or viscosity value of the medium (5) during ongoing operation, wherein the density and/or viscosity value serves to verify the primary density and/or viscosity value determined by the density and/or viscosity measuring device (1).

10. Device according to the preceding claim, further comprising a sensor adapter (13) including the MEMS-based master or control density measuring device (10), wherein the sensor adapter (13) and the main channel adapter (9) are matched to each other such that the sensor adapter (13) is detachably connectable to the main channel adapter and such that only in the connected state does the medium (5) flow through the bypass channel (8) formed in the main channel adapter (9) and the sensor adapter (13).

11. Device according to the preceding claim, wherein the sensor adapter (13) further comprises at least one replaceable filter element (12) which is arranged upstream of the MEMS-based master or control density measuring device (10) in the direction of flow such that the medium (5) is filtered before entering the MEMS-based master or control density measuring device (10).

12. Device according to the preceding claim, wherein the sensor adapter comprises a filter holder (14), preferably laterally accessible, which is designed to hold the filter element in an installed position in the sensor adapter (13) such that the filter element (12) is flowed through by the medium (5), and further designed to dispense the filter element (12) laterally if necessary so that the filter element (12) can be replaced.

13. Device according to one of claims 10 to 13, further comprising an additional measuring point (15) with an additional main channel adapter for mechanically and fluidically connecting the MEMS-based master or control density measuring device.

14. Device according to one of claims 10 to 14, further comprising a flow computer configured to verify the primary density and/or viscosity value of the medium determined by the density and/or viscosity measuring device based on the density and/or viscosity value of the medium determined by the MEMS-based master or control density measuring device during ongoing operation of the process plant.

15. Device according to the preceding claim, further comprising a temperature and/or pressure measuring device to determine a temperature and/or pressure representative of the medium flowing through the measuring point, wherein the temperature and/or pressure is supplied to the flow computer, and wherein the flow computer is further configured to use the representative temperature and/or pressure to verify the primary density and/or viscosity value.

16. Device according to one of claims 11 to 16, wherein the main channel adapter and the sensor adapter comprise a quick-coupling system (21) that establishes a fluid connection between a part of the bypass channel (8a) formed in the main channel adapter and a part of the bypass channel (8b) formed in the sensor adapter (13).

17. Device according to the preceding claim, wherein the quick-coupling system is designed such that the two parts of the bypass channel (8a, 8b) can be separated from each other again after being fluidically connected.

**Revendications**

1. Procédé de vérification d'un dispositif de mesure de densité et/ou de viscosité soumis à obligation d'étalonnage, dans un point de mesure d'une installation de procédé pendant un fonctionnement en cours, un milieu - notamment un milieu contenant des hydrocarbures - s'écoulant à travers un canal principal de l'installation, le procédé comprenant les étapes suivantes :

   • Fourniture d'un canal secondaire connecté comme dérivation (bypass) au canal principal, le canal secondaire étant raccordé fluidiquement à deux zones du canal principal présentant des diamètres différents (S100) ;
   • Fourniture d'un dispositif de mesure de densité de type maître ou de contrôle basé sur la technologie MEMS dans le canal secondaire, de manière à ce qu'il soit traversé par le milieu (S200) ;
   • Fourniture d'un adaptateur de canal principal disposé dans ou sur le canal principal, l'adaptateur étant conçu pour contrôler l'écoulement du milieu à travers le canal secondaire de sorte que celui-ci ne soit traversé par le milieu que lorsque le dispositif MEMS maître ou de contrôle est raccordé mécaniquement à l'adaptateur du canal principal (S101) ;
   • Réalisation d'au moins une mesure de vérification au moyen du dispositif MEMS maître ou de contrôle (S300) ;
   • Vérification du dispositif de mesure de densité et/ou de viscosité sur la base de la ou des mesures de vérification effectuées par le dispositif MEMS maître ou de contrôle (S400).

2. Procédé selon la revendication 1 ou 2, comprenant en outre l'étape suivante :

   • Fourniture d'au moins un élément filtrant remplaçable dans le canal secondaire, de préférence intégré à l'adaptateur de capteur, l'élément filtrant étant disposé en amont du dispositif MEMS maître ou de contrôle dans la direction d'écoulement, de manière que le milieu soit filtré avant de pénétrer dans le dispositif MEMS (S102).

3. Procédé selon la revendication 2 ou 3, dans lequel le dispositif MEMS maître ou de contrôle n'est raccordé de manière détachable à l'adaptateur du canal principal que pour la ou les mesures de vérification, et n'est traversé par le milieu qu'à ce moment.

4. Procédé selon la revendication précédente, dans lequel le dispositif MEMS maître ou de contrôle est retiré de l'adaptateur du canal principal après la ou les mesures de vérification, sans interrompre le fonctionnement.

5. Procédé selon l'une quelconque des revendications précédentes, dans lequel le dispositif MEMS maître ou de contrôle est contrôlé, de préférence de manière récurrente et particulièrement dans un laboratoire, au moyen d'un milieu de référence mesuré selon une procédure traçable à des étalons nationaux (S500).

6. Procédé selon l'une quelconque des revendications précédentes, dans lequel le dispositif MEMS maître ou de contrôle est utilisé sur un autre point de mesure pour vérifier un autre dispositif de mesure de densité et/ou de viscosité, ce point de mesure comprenant de préférence un autre adaptateur de canal principal permettant le raccordement mécanique du dispositif MEMS.

7. Procédé selon l'une des revendications 1 à 3 ou 7, dans lequel le dispositif MEMS maître ou de contrôle est plombé lorsqu'il est fixé à l'adaptateur du canal principal.

8. Procédé selon l'une quelconque des revendications précédentes, dans lequel une température et/ou une pression représentative(s) du point de mesure en fonctionnement est/sont utilisée(s) pour la vérification du dispositif de mesure de densité et/ou de viscosité.

9. Dispositif destiné à la vérification d'un dispositif de mesure de densité et/ou de viscosité (1) soumis à obligation d'étalonnage dans un point de mesure (2) d'une installation de procédé (3) pendant le fonctionnement, au moyen d'un dispositif MEMS maître ou de contrôle (10), le point de mesure comprenant au moins :

   • un canal principal (4) à travers lequel, en fonctionnement, s'écoule un milieu (5), notamment un milieu contenant des hydrocarbures, le canal principal comportant au moins deux zones (6, 7) présentant des diamètres différents (D1, D2) ;

• un dispositif de mesure de densité et/ou de viscosité (1) disposé dans ou sur le canal principal, destiné à déterminer une valeur primaire de densité et/ou de viscosité du milieu (5) ;

• un canal secondaire (8a, 8b) raccordé fluidiquement aux deux zones (6, 7) du canal principal, formant une dérivation (bypass) ;

• un adaptateur de canal principal (9) destiné à contrôler l'écoulement dans le canal secondaire de manière que celui-ci ne soit traversé que lorsque le dispositif MEMS maître ou de contrôle y est raccordé mécaniquement ;

• un dispositif MEMS maître ou de contrôle (10) disposé dans le canal secondaire (8a, 8b) pour déterminer une valeur de densité et/ou de viscosité du milieu (5) en fonctionnement, cette valeur servant à vérifier la valeur primaire déterminée par le dispositif (1).

10. Dispositif selon la revendication précédente, comprenant en outre un adaptateur de capteur (13) intégrant le dispositif MEMS maître ou de contrôle (10), l'adaptateur de capteur (13) et l'adaptateur du canal principal (9) étant conçus pour être raccordés mécaniquement de manière détachable, et pour que le milieu (5) ne s'écoule dans le canal secondaire (8) que lorsque les deux adaptateurs sont assemblés.

11. Dispositif selon la revendication précédente, dans lequel l'adaptateur de capteur (13) comprend en outre au moins un élément filtrant remplaçable (12) placé en amont du dispositif MEMS dans la direction d'écoulement, de manière à filtrer le milieu avant son entrée dans le dispositif MEMS (10).

12. Dispositif selon la revendication précédente, dans lequel l'adaptateur de capteur comporte un porte-filtre (14), de préférence accessible latéralement, conçu pour maintenir l'élément filtrant (12) en position de montage, pour permettre son traversée par le milieu, et pour permettre son extraction latérale en vue de son remplacement.

13. Dispositif selon l'une des revendications 10 à 13, comprenant en outre un autre point de mesure (15) muni d'un autre adaptateur de canal principal destiné au raccordement mécanique et fluidique du dispositif MEMS maître ou de contrôle.

14. Dispositif selon l'une des revendications 10 à 14, comprenant en outre un ordinateur de flux (flow computer) configuré pour vérifier la valeur primaire de densité et/ou de viscosité déterminée par le dispositif de mesure (1), sur la base de la valeur déterminée par le dispositif MEMS maître ou de contrôle en fonctionnement.

15. Dispositif selon la revendication précédente, comprenant en outre un capteur de température et/ou de pression destiné à déterminer une température et/ou une pression représentative(s) du milieu traversant le point de mesure, la température et/ou la pression étant transmises à l'ordinateur de flux, lequel les utilise pour vérifier la valeur primaire.

16. Dispositif selon l'une des revendications 11 à 16, dans lequel l'adaptateur du canal principal et l'adaptateur du capteur comprennent un système de couplage rapide (21) permettant de relier fluidiquement une partie (8a) du canal secondaire formée dans l'adaptateur du canal principal à une partie (8b) formée dans l'adaptateur du capteur (13).

17. Dispositif selon la revendication précédente, dans lequel le système de couplage rapide est conçu pour permettre la séparation des deux parties (8a, 8b) du canal secondaire après leur raccordement fluidique.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0874976 A1